**Europäisches Patentamt**

**European Patent Office**

**Office européen des brevets**

(19)

(11) Veröffentlichungsnummer: **0 198 945**
**A2**

# (12) EUROPÄISCHE PATENTANMELDUNG

(21) Anmeldenummer: **85109731.1**

(22) Anmeldetag: **02.08.85**

(51) Int. Cl.⁴: **B 07 B 9/00**

(30) Priorität: **18.04.85 DE 3513986**

(43) Veröffentlichungstag der Anmeldung:
**29.10.86 Patentblatt 86/44**

(84) Benannte Vertragsstaaten:
**AT DE FR GB IT NL**

(71) Anmelder: **HAZEMAG Dr. E. Andreas GmbH & Co.**
**Rösnerstrasse 6-8 Postfach 34 47**
**D-4400 Münster(DE)**

(72) Erfinder: **Huwald, Eberhard, Dr.**
**Haus Kleve Weg 2**
**D-4400 Münster(DE)**

(72) Erfinder: **Otte, Robert**
**Hänndelstrasse 10**
**D-4405 Nottuln(DE)**

(72) Erfinder: **Gerbermann, Bernhard**
**Robert-Koch-Strasse 71**
**D-4404 Telgte(DE)**

(54) **Klassier- und Sichtanlage zum Abtrennen von unerwünschsten Gutteilchen aus einem Schüttgutgemisch.**

(57) Die Erfindung betrifft eine Klassier- und Sichtanlage zum Abtrennen von unerwünschten Gutteilchen aus einem Schüttgutgemisch. Sie weist eine Siebmaschine (1) zum Aufteilen des Materialstromes in mehrere Fraktionen und nachgeschaltete Luftstromsichter (5) für jede einzelne Fraktion und mit diesen verbundene Filterabscheider (9) zum Abscheiden der unerwünschten Gutteilchen auf. Die Erfindung zeichnet sich dadurch aus, daß zur Verbindung der lotrecht angeordneten Sichterrohre (6) mit den Filterabscheidern (9) gerade, die ersteren verlängernde Rohrleitungen (7) vorgesehen sind, die in Absetzkammern (8) der Filterabscheider (9) ein Stück hineinragen. Weiterhin ist für alle Luftstromsichter-Stränge nur ein Ventilator (19) vorgesehen, jedoch sind hinter den Filterabscheidern in den von diesen abführenden Rohrleitungen (17) Regelorgane (25) verhanden, die in Abhängigkeit von der in jedem Luftstromsichter-Strang gemessenen Strömungsgeschwindigkeit steuerbar sind. Die erfindungsgemäße Anlage ist besonders geeignet zum Abtrennen von Holz-, Kunststoffund ähnlichen Teilchen sowie Staub aus zerkleinerten Abbruchmaterialien, sogenanntem Bauschutt.

0198945

## Beschreibung

Klassier- und Sichtanlage zum Abtrennen
von unerwünschten Gutteilchen aus einem
Schüttgutgemisch

Die Erfindung betrifft eine Klassier- und Sichtanlage
zum Abtrennen von unerwünschten Gutteilchen aus einem
Schüttgutgemisch, insbesondere zum Abtrennen von Holz-,
Kunststoff-, Dachpapp- und ähnlichen Teilchen sowie
von Staub aus zerkleinerten und von Metallteilen befreiten Abbruchmaterialien, sogenanntem Bauschutt. Sie
besteht aus einer Siebmaschine zum Aufteilen des Materialstromes in mehrere Fraktionen und nachgeschalteten Luftstromsichtern für die einzelnen Fraktionen,
wobei die Luftstromsichter mit ihrem Feingutaustrag
über Rohrleitungen an Absetzkammern von Filterabscheidern angeschlossen sind und die Sichtluftströme durch
hinter den Filterabscheidern erzeugten, regelbaren
Unterdruck hervorgerufen werden.

Die Wiederverwendung von Abfallstoffen aus der Bauindustrie, bei denen es sich überwiegend um Baurestmassen abgebrochener Gebäude handelt, gewinnt zunehmend
an Bedeutung. Dadurch werden die Reserven mineralischer
Rohstoffe und das ohnehin schon knappe Deponievolumen
für nicht wiederverwertbare Abfallstoffe geschont, um
nur zwei der vielen hierfür sprechenden Gründe zu
nennen.

Zur Aufbereitung dieser speziellen Abfallstoffe - im
folgenden mit Bauschutt bezeichnet - ist eine Anlage
erstellt worden, die aus vier Hauptteilen besteht,

...

nämlich einer Zerkleinerung, einer Metallausscheidung, einer Klassierung und einer Sortierung (siehe "Allgemeine Bauzeitung" Nr. 37, Seiten 31/32, vom 16. 9. 83).

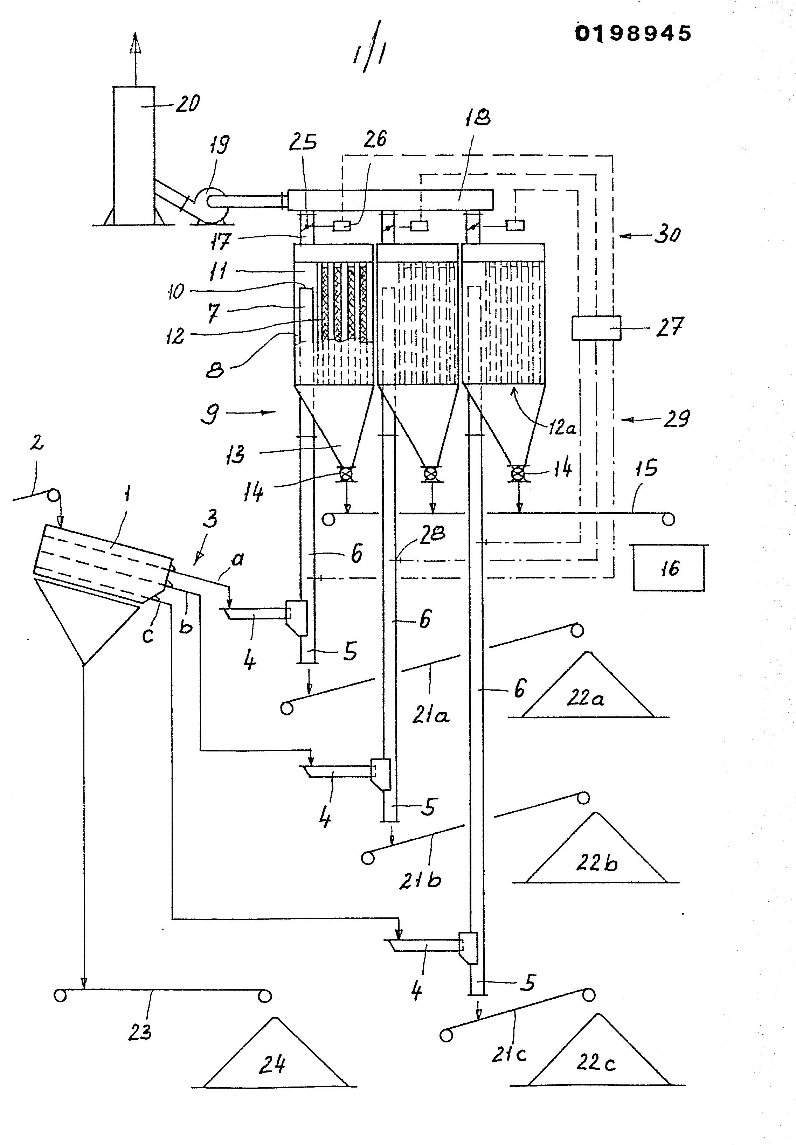

Der zerkleinerte, mittels eines Magnetabscheiders von Eisen und durch Vorabsiebung von groben Teilen befreite Bauschutt wird bei dieser bekannten Anlage mittels einer Siebmaschine in mehrere Fraktionen aufgeteilt. Jede Fraktion wird einem Luftstromsichter, wie er im Prinzip aus der Zeitschrift "Verfahrenstechnik", 1982, Heft 7/8, Seite 642, Bild 9, bekannt ist, zugeführt. Die in jeder Fraktion enthaltenen leichten Gutteilchen, wie Holz, Dachpappe, Leichtbaustoffe, Papier und anhaftende Stäube, die bei der späteren Wiederverwendung des Bauschutts stören, gelangen mit dem Sichtluftstrom in einen Filterabscheider, in dem sie gesammelt und aus dem sie mittels Schleusen ausgetragen werden, während die schweren Gutteilchen aus den Luftstromsichtern nach unten herausfallen und über Transportbänder abgeführt werden. Durch Aufteilung des Bauschutts in mehrere Fraktionen und getrennte Sichtung werden saubere, von störenden Stoffen befreite Gutanteile gestaffelter Körnung erhalten, die sich für Bauzwecke, z. B. als Betonzuschlagstoff, gut eignen. Die Sichtluft wird mittels eines jedem Filterabscheider nachgeschalteten Ventilators zu einem Abluftkamin gefördert. Die Ventilatoren sind in ihrer Leistung einzeln regelbar, um die Sichtluftgeschwindigkeit in jedem Luftstromsichter dem zu sichtenden Gutteil anpassen zu können. Denn die Art und Zusammensetzung der Gutteile können stark variieren.

Im allgemeinen werden zur Vorabscheidung grober Teile aus dem einen Luftstromsichter verlassenden Luftstrom Zyklone verwendet. Im Hinblick auf die im Bauschutt

...

enthaltenen Stäube, Sande und Erden, welche oft feucht
sind, sind Zyklone jedoch bei der beschriebenen Anlage
nicht verwendbar gewesen, weil sich ihre Materialablaufkonen sehr schnell zusetzen. Deshalb hat man dort
den Filterabscheidern eine Absetzkammer vorgeschaltet,
die in einfacher Weise durch eine von Filterschläuchen
freigehaltene Kammer von Mehrkammerfiltern gebildet
ist.

Als nachteilig hat sich bei der bekannten Anlage erwiesen, daß wegen der erheblichen Größe der Filterabscheider und der diesen nachgeschalteten Ventilatoren
und ihrer Zuordnung zu den Luftstromsichtern und wegen
der Tatsache, daß die Rohrleitungen zwischen den Luftstromsichtern und den Filterabscheidern in die Absetzkammern der Filterabscheider seitlich einmünden, diese
Leitungen schräg verlaufen und mit Krümmern versehen
sind. Dadurch kommt es in den Rohrleitungen leicht zu
Verstopfungen und in den Krümmern zu hohem Verschleiß
durch das sehr abrasive Material. Nachteilig ist auch
der große Platzbedarf dieser Anlage. Auch ist die Beistellung je eines Ventilators für jeden Sichter-Filter-
Strang sehr aufwendig.

Aufgabe der Erfindung ist es, eine Klassier- und Sichtanlage zu schaffen, die kompakter baut, Betriebsstörungen durch Anbackungen und Verschleiß vermeidet
und die billiger und einfacher regelbar ist. Gelöst
wird diese Aufgabe dadurch, daß die Filterabscheider
mit ihrer Absetzkammer jeweils über dem zugehörigen
Luftstromsichter angeordnet und die als gerade Verlängerungen der lotrecht angeordneten Sichterrohre
ausgebildeten Rohrleitungen von unten in die Absetzkammern der Filterabscheider so eingeführt sind, daß
oberhalb ihres oberen Endes ein freier Raum vorhanden

...

ist, in dem die vom Sichtluftstrom mitgeführten Gutteilchen ihre Aufwärtsbewegung in die zu den Filterelementen führende Richtung ändern können, ohne die
Wände der Absetzkammer wesentlich zu berühren, und daß
sämtliche Filterabscheider an einen einzigen Ventilator über Rohrleitungen angeschlossen sind, die vor
ihrer Zusammenführung mit je einem Regelorgan versehen
sind und die Regelorgane in Abhängigkeit von der in
jedem Luftstromsichter-Filter-Strang gemessenen Strömungsgeschwindigkeit steuerbar sind.

Infolge dieser Ausbildung der Anlage können die Filterabscheider und damit auch die Sichter dicht nebeneinander angeordnet werden. Außerdem können die Luftstromsichter unmittelbar unter den Filterabscheidern
angeordnet werden, so daß sich kurze Rohrleitungen ergeben und eine sehr kompakte Gesamtbauart erzielt wird.
In den senkrechten Rohrleitungen sind weder Anbackungen
noch sonderlicher Verschleiß zu befürchten. Die Zuführung des Rohgasstromes in den freien Teil eines Filterabscheiders von unten her ist zwar bekannt aus der
DE-PS 10 66 844, jedoch sind auch hier Umlenkungen vorgesehen, insbesondere aber wären diese in Verbindung
mit einem Sichter erforderlich, so daß die zuvor beschriebenen Nachteile auch hier gegeben sind. Die
dicht nebeneinander erfolgende Anordnung der Filterabscheider erleichtert auch die Verwendung nur eines
Ventilators für sämtliche Sichter-Filter-Aggregate,
was ebenfalls eine Raum- und Kostenersparnis mit sich
bringt. Denn ein größerer Ventilator ist billiger als
mehrere kleinere. Auch ergibt sich daraus eine Energieersparnis.

Die Regelung der Strömungsgeschwindigkeiten in den
einzelnen Luftstromsichtern kann wie bei der bekannten

. . .

Anlage von Hand erfolgen. Dies ist jedoch umständlich,
weil wegen des Vorhandenseins nur eines Ventilators
bei Veränderung der Luftstromgeschwindigkeit in einem
Luftstromsichter die Regelorgane in den Leitungen der
anderen Luftstromsichter nachgestellt werden müssen.
Solche Regelungen sind erforderlich, wenn in einer
Fraktion durch den Luftstromsichter abzutrennende
Stoffe sich in der Teilchengröße oder in der Dichte
ändern, was bei der Verarbeitung eines Gemisches wie
Bauschutt, dessen Ursprung sehr unterschiedlich sein
kann, oft der Fall ist. Auch der spätere Verwendungszweck einer einzelnen Fraktion kann eine Änderung der
Strömungsgeschwindigkeit in dem einen oder anderen
Luftstromsichter erforderlich machen. Z. B. können
Schlackenbaustoffe im einen Fall erwünscht, im anderen
unerwünscht sein, so daß sie abgeschieden und verworfen werden müssen.

Deshalb ist bei der erfindungsgemäßen Ausbildung der
Anlage eine automatische Regelung der Sichtluftgeschwindigkeiten in den einzelnen Luftstromsichtern
vorteilhaft, die so ausgebildet ist, daß sie bei willkürlicher Veränderung der Strömungsgeschwindigkeit in
einem der Luftstromsichter selbsttätig dafür sorgt,
daß durch Verstellen der Regelorgane in den anderen
Rohrleitungen die übrigen Luftstromsichter mit unveränderter Strömungsgeschwindigkeit weiterarbeiten. Eine
solche Regelung hat auch noch den Vorteil, daß Veränderungen des Filterwiderstandes jedes einzelnen Filterabscheiders automatisch erfaßt werden und zu einer
Nachregelung der Luftmenge führen, so daß die gewünschte Strömungsgeschwindigkeit in jedem Luftstromsichter beibehalten wird.

Es ist in der Entstaubungstechnik zwar allgemein be-

...

kannt, einem einzigen Filterabscheider mit nachgeschaltetem Ventilator mehrere Absaugstellen zuzuordnen und jede Absaugstelle mit Regelorganen, wie Regelklappen, zu versehen, mit denen die Strömungsgeschwindigkeit für jede Stelle gesondert eingestellt wird. Bei solchen Absaugstellen kommt es auf eine genaue Einstellung der Strömungsgeschwindigkeit aber nicht an, und außerdem können die Regelklappen nicht verschmutzen. Bei der Sichtung von zerkleinertem Bauschutt können in der Sichtluftleitung jedoch keine Regelklappen vorgesehen werden, weil sie Verstopfungen zur Folge haben würden.

Bei der erfindungsgemäßen Ausbildung der Anlage erfolgt die Regelung der einzelnen Luftströme erst hinter den Filterabscheidern, da hier keine Gutteilchen mehr in dem Luftstrom enthalten sind. Im Falle von Luftstrom-Sichtanlagen ist es unter Umständen von großer Bedeutung, die Strömungsgeschwindigkeit in den einzelnen Luftstromsichtern auf bestimmten gewollten Werten auch dann zu halten, wenn einer oder mehrere der Luftstromsichter in ihrer Strömungsgeschwindigkeit verändert werden.

Vorteilhaft ist es, wenn zur Erfassung von Änderungen der Strömungsgeschwindigkeit jeder Sichter-Filter-Strang mit einer Einrichtung zur Messung des im Rohrsystem herrschenden Drucks versehen und diese mit einer Steuereinrichtung zur automatischen Betätigung des zugehörigen Regelorgans verbunden ist. Die Grundeinstellung auf eine bestimmte Strömungsgeschwindigkeit in den einzelnen Luftstromsichtern erfolgt von Hand auf Grund von Erfahrungswerten, ggf. unter Hinzuziehung einer Staudruckmeßeinrichtung von der Art, wie sie allgemein für Strömungsmessungen benutzt wird.

...

0198945

Wenn einmal bei der erfindungsgemäß ausgebildeten Anlage die Strömungsgeschwindigkeit in jedem Luftstromsichter auf die zu sichtende Kornklasse eingestellt ist, ist es zweckmäßig, bei erforderlich werdenden Änderungen der Strömungsgeschwindigkeit nur noch den Unterdruck, d. h. den statischen Druck jedes Sichter-Filter-Stranges in der zuvor beschriebenen Weise als Vergleichsgröße heranzuziehen, weil die dafür erforderliche Meßstelle nicht verschmutzen kann. Trotzdem kann es zweckmäßig sein, die Einrichtung zur Messung des statischen Drucks auf der Reinluftseite eines jeden Filterabscheiders vorzusehen, z. B. diese direkt an der Reingaskammer anzubringen. Bei entsprechender Ausbildung der Leitungen hinter den Filterabscheidern sind jedoch auch hier Messungen des dynamischen Drucks möglich, z. B. mit bekannten Ring- oder Meßblenden und zugehörigen Steuergliedern, so lange in erfindungsgemäßer Weise die Strömungsgeschwindigkeit in jedem Sichter-Filter-Strang gemessen wird.

Besonders zweckmäßig ist es, die Filterabscheider dicht über den zugehörigen Luftstromsichtern anzuordnen, da eine solche Anlage besonders kompakt baut. Alle Luftstromsichter einer Anlage können dann in einer Ebene liegen, was zusätzlich vorteilhaft ist. Wenn jedoch auf Grund der Siebmaschinenbauart oder der Anordnung derselben und der Aufgabevorrichtungen zu den Luftstromsichtern eine gestufte Anordnung der Sichter zweckmäßig ist, z. B. diese mit ihren Aufgabevorrichtungen seitlich schräg übereinander gestaffelt angeordnet werden, liegt das durchaus im Rahmen der Erfindung, da die sonstigen zuvor genannten Vorteile beibehalten werden.

Vorteilhaft ist es auch, die Absetzkammern, in die

...

die Rohrleitungen von unten her eingeführt sind, jeweils seitlich neben mit Filterelementen versehenen Rohgasräumen der Filterabscheider anzuordnen.

Ein Ausführungsbeispiel der Erfindung wird nachstehend anhand der schematischen Zeichnung näher erläutert, wobei der Übersichtlichkeit wegen ein Teil der Vorrichtungen stark gestaffelt dargestellt ist. Mit Pos.1 ist eine Siebmaschine bezeichnet, der das mittels einer nicht gezeigten Zerkleinerungsanlage gebrochene und von Eisen- und groben Teilen befreite Gut durch ein Förderband 2 aufgegeben wird. Die Siebmaschine zerlegt das Gut in mehrere Fraktionen 3 a, b, c, die über Aufgabevorrichtungen, z. B. Vibrationsrinnen 4, Luftstromsichtern 5 aufgegeben werden. Die als Steigrohr-Schwerkraftsichter ausgebildeten Luftstromsichter sind mit geraden, die lotrecht angeordneten Sichterrohre 6 verlängernden Rohrleitungen 7 mit Absetzkammern 8 verbunden, in die sie ein Stück hineinreichen und die Teil jeweils eines Filterabscheiders 9 sind. Die Rohrleitungen 7 lassen oberhalb ihrer Enden 10 jeweils einen freien Raum 11, in den die vom Sichtluftstrom mitgeführten Gutteilchen ihre Aufwärtsbewegung umkehren können. Die Filterabscheider sind mit Filterelementen 12 versehen, an denen sich die feinen staubförmigen Teilchen des Sichtgutes anlagern, während die groben Teilchen in den Absetzkammern 8 aus dem Luftstrom ausfallen. Die Filterelemente werden von Zeit zu Zeit abgereinigt. Die Filterabscheider weisen Sammeltrichter 13 zum Zusammenführen der abgeschiedenen Stäube und der in den Absetzkammern 8 ausgefallenen Teilchen auf und Schleusen 14, über die diese Gutteilchen ausgetragen werden. Über ein Transportband 15 gelangen die zu verwerfenden Gutteilchen zu einem Sammelcontainer 16.

...

Die Reingasseiten der Filterabscheider weisen kurze Rohrleitungen 17 auf, die in eine Sammelleitung 18 münden, an deren Ende ein Ventilator 19 vorgesehen ist, der die Sichtluft durch die Anlage fördert und dessen Leistung auf den gleichzeitigen Betrieb aller Luftstromsichter-Filter Stränge abgestimmt ist. Ein Kamin 20 ist für das Ablassen der gereinigten Sichtluft ins Freie vorgesehen.

Die von die Verwertung störenden Gutteilchen befreiten Fraktionen fallen aus den Sichtern 5 aus und gelangen über Transportbänder 21 a, b, c zu Sammelplätzen 22 a, b, c. Mit 23 ist ein weiteres Transportband bezeichnet, das den Durchfall des Siebes 1, bestehend aus feinen Sanden, Erden und Abrieb u. dergl., zu einem Sammelplatz 24 fördert. Die Rohrleitungen 17 weisen je ein Regelorgan 25 zur Einstellung und Veränderung der Strömungsgeschwindigkeit eines jeden Luftstromsichters 5 auf. Die Regelorgane sind mit Stellgliedern 26 versehen, die von einer automatisch arbeitenden Steuereinrichtung 27 in Abhängigkeit des in jedem Luftstromsichter-Filter-Stranges mittels Meßeinrichtungen 28 gemessenen statischen Drucks bzw. der diesem jeweils zugehörigen Strömungsgeschwindigkeit angesteuert werden. Mit 29 sind die strichpunktiert gezeichneten Meßleitungen und mit 30 die gestrichelt gezeichneten Steuerleitungen bezeichnet.

Patentansprüche
_____

Klassier- und Sichtanlage zum Abtrennen
von unerwünschten Gutteilchen aus einem
Schüttgutgemisch
_____

1. Klassier- und Sichtanlage zum Abtrennen von unerwünschten Gutteilchen aus einem Schüttgutgemisch,
insbesondere zum Abtrennen von Holz-, Kunststoff-,
Dachpapp- und ähnlichen Teilchen sowie von Staub
aus zerkleinerten und von Metallteilen befreiten
Abbruchmaterialien, sogenanntem Bauschutt, die aus
einer Siebmaschine zum Aufteilen des Materialstromes in mehrere Fraktionen und nachgeschalteten
Luftstromsichtern für die einzelnen Fraktionen besteht, wobei die Luftstromsichter mit ihrem Feingutaustrag über Rohrleitungen an Absetzkammern
von Filterabscheidern angeschlossen sind und die
Sichtluftströme durch hinter den Filterabscheidern
erzeugten, regelbaren Unterdruck hervorgerufen
werden, dadurch gekennzeichnet, daß die Filterabscheider (9) mit ihrer Absetzkammer (8) jeweils
über dem zugehörigen Luftstromsichter (5) angeordnet und die als gerade Verlängerungen der lotrecht
angeordneten Sichterrohre (6) ausgebildeten Rohrleitungen (7) von unten in die Absetzkammern der
Filterabscheider so eingeführt sind, daß oberhalb

. . .

ihres oberen Endes (10) ein freier Raum (11) vorhanden ist, in dem die vom Sichtluftstrom mitgeführten Gutteilchen ihre Aufwärtsbewegung in die zu den Filterelementen (12) führende Richtung ändern können, ohne die Wände der Absetzkammer wesentlich zu berühren, und daß sämtliche Filterabscheider an einen einzigen Ventilator (19) über Rohrleitungen (17, 18) angeschlossen sind, die vor ihrer Zusammenführung mit je einem Regelorgan (25) versehen sind, und die Regelorgane in Abhängigkeit von der in jedem Luftstromsichter-Filter-Strang gemessenen Strömungsgeschwindigkeit steuerbar sind.

2. Anlage nach Anspruch 1, dadurch gekennzeichnet, daß zur Erfassung von Änderungen der Strömungsgeschwindigkeiten in den Luftstromsichtern (5) jeder Sichter-Filter-Strang (5 bis 9) mit einer Einrichtung (28) zur Messung des im Rohrsystem herrschenden Drucks versehen und diese mit einer Steuereinrichtung (27) zur automatischen Betätigung des zugehörigen Regelorgans (25) verbunden ist.

3. Anlage nach Anspruch 2, gekennzeichnet durch eine Einrichtung (28) zur Messung des statischen Drucks.

4. Anlage nach Anspruch 3, dadurch gekennzeichnet, daß die Einrichtung (28) zur Messung des statischen Drucks auf der Reinluftseite eines jeden Filterabscheiders (9) angeschlossen ist.

5. Anlage nach Anspruch 2, gekennzeichnet durch eine Einrichtung (28) zur Messung des dynamischen Drucks und daß diese als Ringblende oder dergl. ausgeführt in der Rohrleitung (17) hinter jedem Filterabscheider (9) angeordnet ist.

. . .

6. Anlage nach Anspruch 1, dadurch gekennzeichnet, daß die Filterabscheider (9) dicht über dem zugehörigen Luftstromsichter (5) angeordnet sind.

7. Anlage nach Anspruch 6, dadurch gekennzeichnet, daß die Luftstromsichter (5) in einer Ebene angeordnet sind.

8. Anlage nach Anspruch 1, dadurch gekennzeichnet, daß die Luftstromsichter (5) mit den zugehörigen Aufgabevorrichtungen (4) seitlich schräg übereinander gestaffelt angeordnet sind.

9. Anlage nach Anspruch 1, dadurch gekennzeichnet, daß die Absetzkammern (8), in die die Rohrleitungen (7) von unten her eingeführt sind, jeweils seitlich neben mit Filterelementen (12) versehenen Rohgasräumen (12a) der Filterabscheider (9) angeordnet sind.

...